# EUROPÄISCHE PATENTSCHRIFT

(11) **EP 0 400 275 B1**
(45) Veröffentlichungstag und Bekanntmachung des Hinweises auf die Patenterteilung: **10.11.1993**
(21) Anmeldenummer: 90104082.4
(22) Anmeldetag: 02.03.1990
(51) Int. Cl.: B60K 7/00, B60K 17/04, B62D 51/04

(54) **Antriebseinheit für ein Flurförderfahrzeug, insbesondere für einen Gehhubwagen**
Propulsion unit for a floor conveyor, particularly for a pedestrian controlled lift-truck
Unité de propulsion pour un chariot de manutention, notamment pour un chariot élévateur à conducteur à pied

(30) Priorität: 01.06.1989 DE 3917831
(43) Veröffentlichungstag der Anmeldung: 05.12.1990
(73) Patentinhaber: HURTH Getriebe und Zahnräder G.m.b.H., D-80809 München (DE)
(72) Erfinder: Strehler, Richard, D-8224 Chieming (DE); Schwibach, Wilhelm, D-8000 München 50 (DE)

(56) Entgegenhaltungen:
- GB-A- 1 058 438
- GB-A- 1 135 202
- GB-A- 1 481 558
- US-A- 3 827 528
- US-A- 3 865 203

## Beschreibung

### Stand der Technik

Die Erfindung betrifft eine Antriebseinheit für ein Flurförderfahrzeug, die im wesentlichen aus einem E-Motor, einem zweistufigen Getriebe, einem Antriebsrad und einer Bremse besteht und um eine vertikale Achse schwenkbar im Fahrgestell des Flurförderfahrzeugs aufnehmbar ist, wobei das Antriebsglied der ersten Getriebestufe auf der horizontalen Abtriebswelle des E-Motors, das Abtriebsglied der ersten Getriebestufe auf einer in einem Getriebegehäuse gelagerten Ritzelwelle der zweiten Getriebestufe und das Abtriebsglied der zweiten Getriebestufe auf einer Abtriebswelle, deren eines, das Antriebsrad aufnehmende Ende aus dem Getriebegehäuse herausragt, angebracht sind, und wobei der E-Motor achsparallel zur Ritzelwelle und zur Abtriebswelle angeordnet ist.

Eine solche Antriebseinheit ist in den von der deutschen Firma Jungheinrich AG, Hamburg, vertriebenen Gehhubwagen mit der Typenbezeichnung EGC 06/08 eingebaut. Bei dieser bekannten Antriebseinheit ist die Bremse zusammen mit der als Kettentrieb ausgeführten zweiten Getriebestufe innerhalb des zum Antriebsrad hin nur mit einem relativ große Öffnungen aufweisenden Deckel versehenen Gehäuse untergebracht. Zur Inspektion und/oder Reparatur der Bremse muß immer das Antriebsrad von der Abtriebswelle des Getriebes abgezogen werden, was umständlich und zeitaufwendig ist, zumal das Fahrzeug dafür aufgebockt werden muß.

### Aufgabe

Von daher liegt der Erfindung die Aufgabe zugrunde, eine Antriebseinheit der eingangs genannten Art so zu gestalten, daß die Bremse leicht zugänglich ist, wobei der Hüllkreis, also der beim Schwenken um die vertikale Schwenkachse von der Antriebseinheit benötigte Platz, so klein wie möglich gehalten werden soll.

### Lösung und Vorteile

Die Lösung der Aufgabe sieht eine Antriebseinheit mit den Merkmalen des Hauptanspruchs vor. In den beiden Unteransprüchen werden zweckmäßige Ausgestaltungen aufgezeigt. Die Anordnung der Bremse innerhalb des Abtriebsgliedes der ersten Getriebestufe bringt gegenüber der bekannten Ausführung eine erhöhte Wartungsfreundlichkeit, da die Bremse ohne große Vorarbeiten von außen zugänglich ist. Innerhalb des Abtriebsgliedes der ersten Stufe benötigt die Bremse auch keinen zusätzlichen Bauraum, der das Getriebe verbreitern und damit den Hüllkreis vergrößern würde.
Das Merkmal des Anspruchs 2 gibt eine die Bedienung des Fahrzeugs erleichternde Ausführung der Bremse an.

Die Anordnung der Bremse innerhalb des Abtriebsgliedes der ersten Getriebestufe ist besonders vorteilhaft, wenn diese von einem Zugmittelgetriebe gebildet ist (Anspruch 3). Im Gegensatz zu einer auch denkbaren, weil den Hüllkreis im Bereich des Antriebsrades nicht vergrößernden, Anordnung der Bremse neben dem Antriebsglied der ersten Getriebestufe bleibt die Bremse nämlich auch funktionsfähig, falls das Zugmittel gerissen sein sollte. Außerdem ermöglicht die erfindungsgemäße Bremsen-Anordnung auch eine problemlose Schmierung der zweiten Getriebestufe, ohne daß die Gefahr besteht, daß durch Eindringen von Schmiermittel in die Bremse diese unbrauchbar werden könnte.

### Zeichnungen

Die Erfindung wird nachstehend anhand eines Ausführungsbeispieles beschrieben, das in 4 Figuren dargestellt ist.

Es zeigen
- Fig. 1: einen Gehhubwagen, bei dem die erfindungsgemäße Antriebseinheit anwendbar ist,
- Fig. 2: eine Längsschnitt durch eine erfindungsgemäße Antriebseinheit,
- Fig. 3: eine Seitenansicht in Pfeilrichtung III, und
- Fig. 4: einen Querschnitt etwa längs der Linie IV-IV.

### Beschreibung

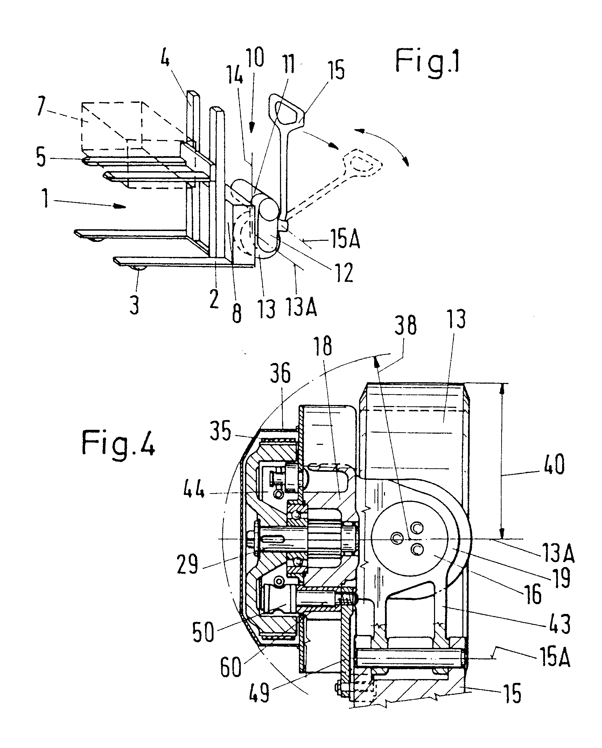

In Fig. 1 ist als ein Beispiel eines Flurförderfahrzeugs ein sog. Gehhubwagen 1 gezeigt. Sein Fahrgestell 2 nimmt eine Antriebseinheit 10 auf, die um eine vertikale Achse 14 schwenkbar ist und im wesentlichen aus einem E-Motor 11, einem Getriebe 12 und einem Antriebsrad 13 besteht. An der Antriebseinheit 10 ist eine Deichsel 15 angeordnet, mit der der Gehhubwagen von einer Person gelenkt werden kann und die um eine zur Achse 13A des Antriebsrades 13 parallele Achse 15A schwenkbar ist. In der gezeigten senkrechten Stellung wirkt die Deichsel auf eine hier nicht gezeigte Haltebremse, die bei geneigter Deichsel 15 (gestrichelte Kontur), d.h. in der Stellung "Fahren", gelöst ist. Außer dem Antriebsrad 13 sind noch zwei nicht lenkbare Rollen 3 vorgesehen. Auf dem Fahrgestell 2 ist ein Hubmast 4 angeordnet, an dem eine Hubgabel 5 zur Aufnahme einer Last 7 höhenverschiebbar geführt ist. Die dafür erforderlichen Einrichtungen sind, ebenso wie Batterie für den E-Motor 11, unter einer Haube 8 untergebracht.

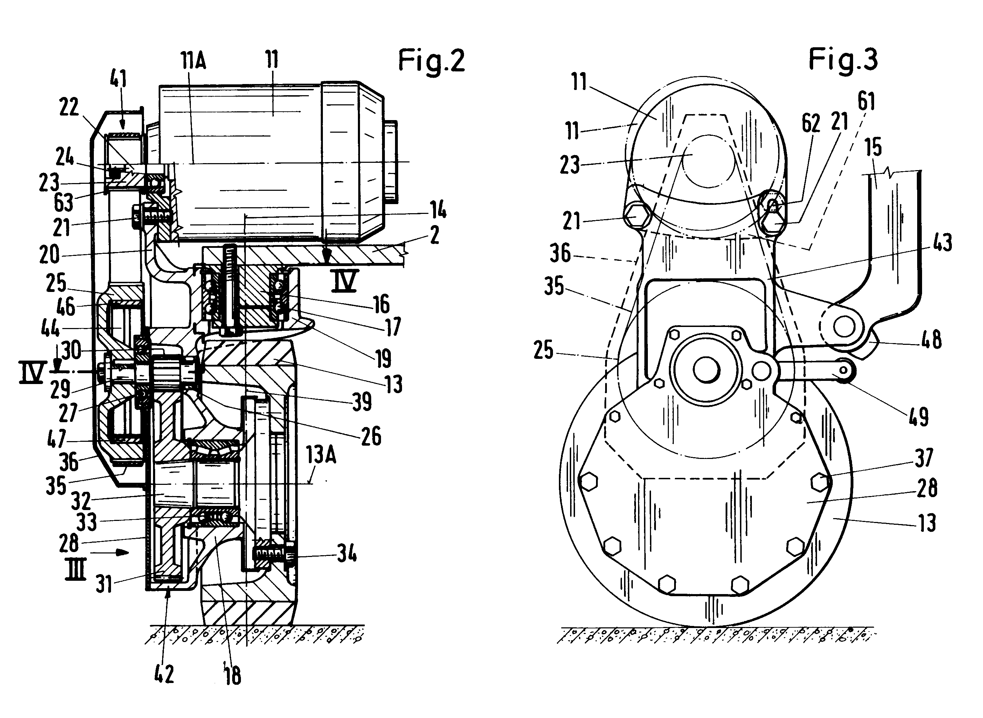

Die Antriebseinheit 10 ist in den Figuren 2 bis 4 gezeigt. Am Fahrgestell 2 ist ein sich nach unten erstreckender zweiteiliger Schwenkzapfen 16 angeschraubt, der den Innenring eines Schwenklagers 17 aufnimmt, mit dem ein Getriebegehäuse 18 und damit die gesamte Antriebseinheit 10 um die vertikale Schwenkachse 14 schwenkbar am Fahrgestell 2 angeordnet ist. Das Getriebegehäuse 18 ist dazu mit einem topfförmigen Aufsatz 19 zur Aufnahme des Außenringes des Schwenklagers 17 versehen. Die Schwenkachse 14 liegt aus lenk-geometrischen Gründen zumindest angenähert in einer mittleren Rotationsebene 39 des Antriebsrades 13. Vom Getriebegehäuse 18 bzw. vom Aufsatz 19 ragt ein Tragarm 20 nach oben, an dem der E-Motor 11 mit Schrauben 21 befestigt ist. Als E-Motor 11 kann ein bürstenloser Gleichstrommotor oder ein frequenzgesteuerter Wechselstrommotor verwendet werden.

Auf die Abtriebswelle 22 des E-Motors 11 ist eine erste Zahnriemenscheibe 23 aufgesetzt, die mit einer Mutter 24 drehfest und axial gehalten ist. Eine zweite Zahnriemenscheibe 25 ist, ebenfalls drehfest und axial nicht verschiebbar, auf einer im Getriebegehäuse 18 und in einem Lagerschild 28 mittels Wälzlagern 26, 27 drehbar gelagerten Ritzelwelle 29 aufgesetzt. Deren Ritzel 30 kämmt mit einem Stirnrad 31, das, wiederum drehfest und axial nicht verschiebbar, auf eine Abtriebswelle 32 aufgesetzt ist. Die Abtriebswelle 32 ist mittels eines Wälzlagers 33 im Getriebegehäuse 18 drehbar gelagert. Ihr dem Stirnrad 31 abgewendetes Ende ragt aus dem Getriebegehäuse 18 heraus und trägt das Antriebsrad 13, das mit Schrauben 34 befestigt ist. Die Motorachse 11A, die Schwenkachse 14 und die Achse 13A des Antriebsrades 13 liegen dabei in einer vertikalen Ebene.

Die erste Zahnriemenscheibe 23 und die zweite Zahnriemenscheibe 25 sind über einen Zahnriemen 35 miteinander verbunden. Diese Teile bilden zusammen eine erste Getriebestufe 41, für die keine Schmierung erforderlich ist. In die zweite Zahnriemenscheibe 25 ist eine Bremse 44 integriert, die weiter unten noch gesondert beschrieben wird. Zum Schutz vor Beschädigungen und vor grobem Schmutz sowie zur Sicherheit der den Gehhubwagen 1 bedienenden Person ist ein leichter Blechdeckel 36 vorgesehen, der am Lagerschild 28 und/oder am Getriebegehäuse 18 befestigt ist.

Das Ritzel 30 und das Stirnrad 31, die wegen der hohen Belastungen einsatzgehärtet sein können, bilden zusammen eine zweite Getriebestufe 42, für die eine Fettschmierung vorgesehen ist. Dadurch sind platzaufwendige Dichtflächen, die bei einer ebenfalls möglichen Ölschmierung erforderlich sind, entbehrlich, so daß das Lagerschild 28 ebenfalls aus Blech gefertigt werden kann. Zur Befestigung am Gehäuse sind Schrauben 37 vorgesehen.

Die gedrängte Bauweise der Antriebseinheit 10 und die Verwendung des platzsparenden Lagerschildes 28 und Blechdeckels 36, insbesondere aber die Integration der Bremse 44 in die Zahnriemenscheibe 25, ermöglichen einen nahezu optimalen Hüllkreisradius 38, der nur wenig größer ist als der Radius 40 des Antriebsrades 13.

Das Wälzlager 33 der Abtriebswelle 32 ist ein zweireihiges Kugel- oder Kegelrollenlager in O-Anordnung. (In Fig. 2 ist unterhalb der Achse 13A die eine und oberhalb der Achse 13A die andere Ausführung gezeigt.) Diese Art der Lagerung gewährleistet einen problemlosen Einbau und eine hohe Steifigkeit. In der Regel kann für das Schwenklager 17 das gleiche Lager verwendet werden, was bei der Beschaffung, Lagerhaltung, Montage und Ersatzteilhaltung von Vorteil ist. Wenn, wie in Fig. 2 gezeigt, die Abtriebswelle 32 über einen (Kegel-)Preßverband mit dem Stirnrad 31 verbunden ist, dann kann über dieses gleichzeitig die axiale Fixierung des zweigeteilten Lagerinnenringes erfolgen.

Die Übersetzung der ersten Getriebestufe 41 kann durch Auswechseln der ersten Zahnriemenscheibe 23 gegen eine mit anderer Zähnezahl einfach geändert werden. Die zweite Zahnriemenscheibe 25 und der Zahnriemen 35 können unverändert bleiben. Um den dann geänderten Achsabstand zu überbrücken, kann für die Befestigung des E-Motors 11 am Tragarm 20 eine Art Schwinge 61 vorgesehen sein, die in Fig. 3 gezeigt ist. Von den beiden Schrauben 21 dient die links gezeigte als Drehpunkt, um den der E-Motor 11 aus seiner gezeichneten Lage herausgeschwenkt werden kann. Um das zu ermöglichen, ist für die rechts gezeigte Schraube im Tragarm 20 ein Langloch 62 vorgesehen. In der geschwenkten Lage wird der E-Motor 11 in üblicher Weise durch Anziehen der Schrauben 21 festgelegt.

Am Getriebegehäuse 18 ist unterhalb des Schwenklagers 17 ein gabelartiger Deichsellagerbock 43 angegossen, in dem die Deichsel 15 um die Achse 15A schwenkbar aufgenommen ist. Der niedere Anlenkpunkt für die Deichsel 15 trägt den Sicherheitsbestimmungen insofern Rechnung, als durch die steile Deichselanordnung die Bedienungsperson bei Rückwärtsfahrt nicht zwischen einem Hindernis und dem Fahrzeug 1 eingeklemmt werden kann. Mittels der Deichsel 15 kann die Antriebseinheit 10 um die vertikale Schwenkachse 14 geschwenkt und damit das Fahrzeug gelenkt werden. Die Deichsel 15 kann auch als "Bremshebel" zum Lüften der als federbelastete Trommelbremse ausgebildeten Bremse 44 benutzt werden. Das Prinzip solcher Federspeicherbremsen ist bekannt (z.B. aus H. Ernst: Die Hebezeuge, Verlag Friedr. Vieweg & Sohn, 1965, Band I, Seiten 105/106), weshalb die Bremse 44 nicht in allen Einzelheiten dargestellt ist. Die zweite Zahnriemenscheibe 25 ist gleichzeitig als Bremstrommel gestaltet, gegen die unter der Wirkung einer nicht dargestellten Feder zwei Bremsbacken 46, 47 wirken.

Zum Lösen der Bremse 44 wird die Deichsel 15 aus der senkrechten Position in eine Schrägstellung (gestrichelte Kontur in Fig. 1) gebracht. Dabei drückt ein Nocken 48 an der Deichsel 15 auf einen im Getriebegehäuse 18 gelagerten Hebel 49, der auf einer Betätigungswelle 60 drehfest mit einem bei Verdrehung gegen die besagte Feder wirkenden Element 50 verbunden ist.

Wenn die erste Getriebestufe 41 als Stirnradtrieb ausgeführt ist, kann das letzte Stirnrad in gleicher Weise, wie oben für die zweite Zahnriemenscheibe 25 angegeben, als Bremstrommel ausgeführt werden. Der Durchmesser und die Breite der Zahnriemenscheibe bzw. des Stirnrades sind so dimensioniert, daß die Bremse ohne negative Beeinflussung des Bauraumes aufgenommen werden kann, und die Betätigungswelle 60 kann seitlich am Stirnradgetriebe herausgeführt werden, also ebenfalls ohne Beeinflussung des Bauraumes.

Die in die zweite Zahnriemenscheibe 25 bzw. in das entsprechende Stirnrad integrierte Trommelbremse ist hinsichtlich ihrer Funktion im wesentlichen eine Haltebremse. Als Betriebsbremse wird sie meist nur im unteren Geschwindigkeitsbereich eingesetzt. Ihre Betätigung erfolgt über einen Federspeicher, gelüftet wird sie über den Nocken 48 an Deichsel 15. Die bei Notbremsung auftretende Erwärmung wird über die Masse der "Bremstrommel" aufgenommen, wobei die Verzahnung die Wärmeabführung positiv beeinflußt.

## Patentansprüche

1. Antriebseinheit für ein Flurförderfahrzeug, die im wesentlichen aus einem E-Motor (11), einem zweistufigen Getriebe (12), einem Antriebsrad (13) und einer Bremse besteht und um eine vertikale Achse (14) schwenkbar im Fahrgestell (2) des Flurförderfahrzeugs aufnehmbar ist und weiterhin folgende Merkmale aufweist:
a) das Antriebsglied der ersten Getriebestufe (41) ist auf der Abtriebswelle (22) des E-Motors (11) angebracht,
b) das Abtriebsglied der ersten Getriebestufe (41) ist auf einer in einem Getriebegehäuse (18) gelagerten Ritzelwelle (29) der zweiten Getriebestufe (42) angebracht,
c) das Abtriebsglied der zweiten Getriebestufe (42) ist auf einer horizontalen Abtriebswelle (32) angebracht, deren eines Ende aus dem Getriebegehäuse (18) herausragt und das Antriebsrad (13) aufnimmt,
d) der E-Motor (11) ist achsparallel zur Ritzelwelle (29) und zur Abtriebswelle (32) angeordnet, und
e) das Abtriebsglied der ersten Getriebestufe (41) ist als Bremstrommel einer Trommelbremse (44) ausgebildet.

2. Antriebseinheit nach Anspruch 1, dadurch gekennzeichnet, daß die Trommelbremse (44) als Federspeicherbremse ausgebildet ist, die von außen über einen gegen die Feder wirkenden Hebel (49) lösbar ist.

3. Antriebseinheit nach Anspruch 1 oder 2, dadurch gekennzeichnet, daß die von Stirnrädern (30,31) gebildete zweite Getriebestufe (42) in einem im wesentlichen vom Getriebegehäuse (18) und von einem Lagerschild (28) gebildeten, ein Schmiermittel enthaltenden Getrieberaum läuft und daß die von einem nicht geschmierten Zugmittelgetriebe gebildete erste Getriebestufe (41) außerhalb dieses Getrieberaums untergebracht ist und mit einem am Lagerschild (28) und/oder am Getriebegehäuse (18) befestigten leichten Blechdeckel (36) nach außen abgedeckt ist.

## Claims

1. A drive unit for a floor conveying vehicle, which drive unit consists substantially of an electric motor (11), a two-stage gear (12), a drive wheel (13) and a brake and can be received in the chassis (2) of the floor conveying vehicle so as to be pivotable about a vertical axis (14), and furthermore has the following features:
a) the drive member of the first gear stage (41) is mounted on the output shaft (22) of the electric motor (11),
b) the output member of the first gear stage (41) is mounted on a pinion shaft (29) of the second gear stage (42), this pinion shaft (29) being supported in a gear housing (18),
c) the output member of the second gear stage (42) is mounted on a horizontal output shaft (32), one end of which projects out of the gear housing (18) and receives the drive wheel (13),
d) the electric motor (11) is arranged axially parallel to the pinion shaft (29) and the output shaft (32), and
e) the output member of the first gear stage (41) is formed as the brake drum of a drum brake (44).

2. A drive unit according to Claim 1, characterised in that the drum brake (44) is formed as a spring-loaded brake, which can be released from the outside by way of a lever (49) acting against the spring.

3. A drive unit according to Claim 1 or 2, characterised in that the second gear stage (42), which is formed by spur wheels (30,31), runs within a gear chamber formed substantially by the gear housing (18) and a bearing plate (28) and containing a lubricant, and in that the first gear stage (41), which is formed by a non-lubricated flexible gear, is accommodated outside this gear chamber and is covered on the outside with a light sheet-metal cover (36) fastened to the bearing plate (28) and/or to the gear housing (18).

## Revendications

1. Unité de propulsion pour un chariot de manutention, cette unité étant essentiellement constituée par un moteur électrique (11), une transmission à deux étages (12), une roue d'entraînement (13) et un frein, étant susceptible d'être logée dans le châssis (2) du chariot de manutention, de façon à pouvoir pivoter autour d'un axe vertical, tandis qu'elle comporte en outre, les particularités suivantes :
a) l'organe de propulsion du premier étage de la transmission (41) est rapporté sur l'arbre de sortie (22) du moteur électrique (11),
b) l'organe de sortie du premier étage de la transmission (41) est rapporté sur un arbre-pignon (29) du second étage de la transmission (42),
c) l'organe de sortie du second étage de la transmission (42) est rapporté sur un arbre de sortie horizontal (32), dont une extrémité fait saillie hors du carter de la transmission (18) et reçoit la roue d'entraînement (13),
d) l'axe du moteur électrique (11) est parallèle à l'arbre-pignon (29) et à l'arbre de sortie (32),
e) l'organe de sortie du premier étage de la transmission (41) est réalisé sous la forme du tambour d'un frein à tambour (44).

2. Unité de propulsion selon la revendication l, caractérisée en ce que le frein à tambour (44) revêt la forme d'un frein à ressort accumulateur, qui peut être desserré à partir de l'extérieur par l'intermédiaire d'un levier (49) agissant contre le ressort.

3. Unité de propulsion selon la revendication 1 ou la revendication 2, caractérisée en ce que le second étage de la transmission (42), constitué d'engrenages droits (30, 31), tourne dans une chambre de transmission, constituée essentiellement par le carter (18) de la transmission et par un flasque de palier (28), contenant un lubrifiant, et en ce que le premier étage (41) de la transmission, constitué par une transmission à courroie ou à chaîne, non lubrifiée, est logée en dehors de cette chambre de transmission et est recouverte vers l'extérieur par un léger couvercle en tôle (36) fixé au flasque de palier (28) et/ou au carter (18) de la transmission.
